(19) **Europäisches Patentamt**

**European Patent Office**

**Office européen des brevets**

(11) **EP 0 626 338 B1**

(12) **EUROPEAN PATENT SPECIFICATION**

(45) Date of publication and mention
of the grant of the patent:
**17.03.1999 Bulletin 1999/11**

(51) Int. Cl.$^6$: **B66F 3/35**

(21) Application number: **94201500.9**

(22) Date of filing: **26.05.1994**

(54) **Inflatable body**

Aufblasbarer Körper

Corps gonflable

(84) Designated Contracting States:
**AT BE CH DE DK ES FR GB GR IE IT LI NL PT SE**

(30) Priority: **26.05.1993 EP 93201518**

(43) Date of publication of application:
**30.11.1994 Bulletin 1994/48**

(73) Proprietor: **ZUMRO B.V.**
**NL-2163 HA Lisse (NL)**

(72) Inventors:
• **Beukers, A.**
**NL-2106 EG Heemstede (NL)**
• **de Jong, Th.**
**NL-2421 TT Nieuwkoop (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**EP-A- 0 345 450**     **DE-A- 3 703 593**
**FR-A- 2 269 487**     **FR-A- 2 305 381**
**GB-A- 1 134 033**     **US-A- 4 036 472**
**US-A- 4 372 533**

• **PATENT ABSTRACTS OF JAPAN vol. 16, no. 232
(M-1256) 28 May 1992 & JP-A-04 046 840
(BANDO CHEM IND LTD.) 17 February 1992**
• **PATENT ABSTRACTS OF JAPAN vol. 16, no. 232
(M-1256) 28 May 1992 & JP-A-04 046 839
(BANDO CHEM IND LTD.) 17 February 1992**

## Description

The present invention is directed to an inflatable body, comprising a fiber reinforced elastomer body. Inflatable bodies are particularly suitable as lifting bodies, as pressure vessels for gaseous, liquified or liquid materials or for blocking leaks and the like. An inflatable body having the features as set forth in the preamble portion of claim 1 is known for example from US-A-4,036,472.

Lifting bodies are used for lifting heavy objects, for example parts of collapsed structures under which persons have become wedged. The cause thereof can be heavy earthquakes, collapsing of buildings, airplane disasters, train accidents and the like. In such situations usually only a very narrow entrance is present for applying a lifting apparatus. In such situations inflatable lifting bodies, or bags, are used, which are very flat in a non-inflated condition.

Other applications of the use of lifting bags, or lifting bodies, are moving heavy machines, for example in the mining industry, changing tyres, lifting and levelling of buildings, re-railing of locos and lorries, but also in construction for forcing steel beams apart or for pressing together of ship segments/plates for welding works.

In the art generally two types of lifting bags are distinguished, namely high pressure and low pressure bags. The group of low pressure bags gives an equal lifting capacity over the total lifting height. Furthermore, because of the limited forces per unit area there will be no damage of weak surfaces. The lifting capacity depends on the size of the contact area.

A low pressure bag usually operates at an air pressure of about 0.2 till 1.0 bar in excess of atmospheric pressure and acts on a large area. Usually lifting heights are available from about 25 cm to 300 cm with lifting capacities up to about 16 tonnes.

The high pressure lifting bags give a high lifting capacity on a relatively small area, with a limited lifting height.

The high pressure bags, usually prepared from vulcanized rubber reinforced with high tensile polyamide cord operate at air pressures in excess of 5 bars, up to 12 bars. The lifting capacities of those high pressure bags usually range from over 10, up to 75 tonnes. The maximum lifting height is however limited and the force exerted by the bag acts at a small area, so that weak surfaces could become damaged. Additionally, the high pressure lifting bags have the property that they change in geometry when inflated, from a flat, rectangular shape, via a pillow shape, to a spherical shape, when fully inflated, as this is the equilibrium shape of the material. The corners are the limiting weak spots.

It will be clear that depending on the requirements of the situation either high pressure or low pressure systems are used. With the high pressure systems the disadvantage exists that the lifting force decreases upon increase of the lifting height, due to the decreasing surface area. During rescue actions usually a constant, high lifting force is required over a large lifting height.

One of the objects of the invention is to provide a lifting body having a large lifting capacity over a reasonably large lifting height. Another object of the invention is to provide a lifting body having substantially less weight per unit of lifting power.

The invention is directed to an inflatable body having the features as set forth in the characterising portion of claim 1. Only the poles and/or the inlet (outlet) for the pressurizing medium will form discontinuities in the shape of the body.

This inflatable body is comprised of a fiber reinforced elastomer body. The fibers have been wound along substantially geodetical lines, and the shape of the inflated body is designed so that the load is substantially equal everywhere in the fibers (more or less isotensoid). The combination of relatively stiff fiber re-inforcement and flexible matrix material is chosen in such a way that the design, production and use of the inflatable body is very tolerant for deviations and stress-concentrations in the inflatable body. Deviations of geodetics and/or continuity becomes possible to a certain extent, provided the structural integrity is maintained.

The so-called "netting" theory has been used for this design. This theory teaches that in case of the use of stiff fibers in an elastomeric matrix, the influence of the matrix may be discounted for calculating the forces in a system of fibers of a wound construction. This theory is valid when the stiffness of the matrix is neglegibly small compared to the stiffnes of the fibers. A theoretical report on the development of pressure bodies using the netting theory can be found in the report of the Technical University of Delft, The Netherlands, report VTH-166.

Winding the substantially continuous fiber reinforcement along a substantially rotation symmetrical body results then in an equilibrium shape that is non-spherical, preferably approximately elliptical, and determined by the form parameter q as defined in the said report. In view of the applicability of the netting theory to the body of the present invention, which is justified by the difference in stiffness between the fibers and the matrix, the use of continuous fibers for the winding of the body will lead to the situation where the tension in all the fibers is substantially equal throughout the body (isotensoid).

In the current high pressure bags the fibers are mainly cross-ply (0-90°), which is totally different from the situation in the invention.

The inflatable body according to the invention may be used as lifting body, as discussed hereinabove, but also for other applications wherein high pressure inflatable bodies can be useful, such as levelling of buildings and structures, support of platforms and the like. Examples thereof are lightweight, crash resistant pressure vessels, for example for holding hazardous gases or liquids under high pressure, such as gaseous, liquified or liquid propellants in the automotive and aerospace industry.

The vessel can be either fire proof by to the choice of the materials of construction thereof, or by providing a metal or other fire proof box around the vessel.

Another example is the use as connecting "rod" means with adjustable rigidity, where the rigidity is adjusted by changing the pressure in the body. A high pressure provides a high rigidity and vice versa. This makes it also possible to have connections with less narrow tolerances. It is also possible to use the body according to the invention as a plug or sealing closure in pipes, etc.

The pressure in the inflatable body will be applied by suitable means known in the art, like by air or another suitable pressurizing medium, for example another gas or a liquid medium.

The lifting body has a geometrically continuous shape in inflated condition without external load. In unloaded equilibrium condition substantially no stress concentrations occur. The shape of the body contains substantially no discontinuities in the mathematical sense, with the exceptions discussed above. This excludes for example cylindrical bodies, or rectangular bodies.

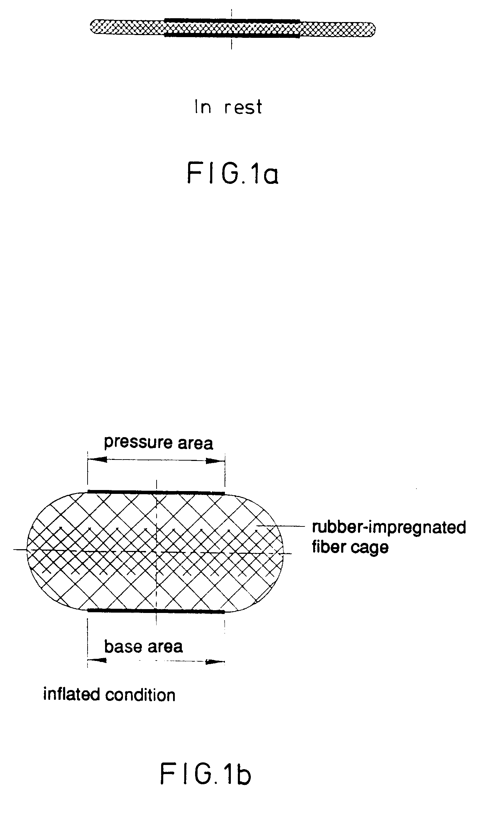

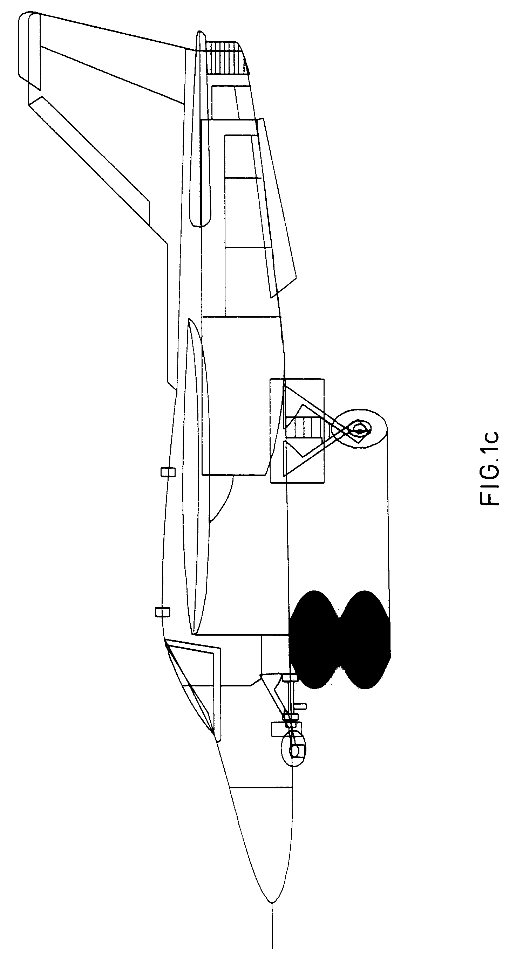

In figure 1a and 1b a lifting body according to the present invention is shown. In 1a the lifting body in a non-inflated condition is shown, where in figure 1b the lifting body is shown in inflated condition.

In fig. 1$^c$ a possible application of the bags of the invention is shown, namely the support of an airplane, with malfunctioning nose wheel.

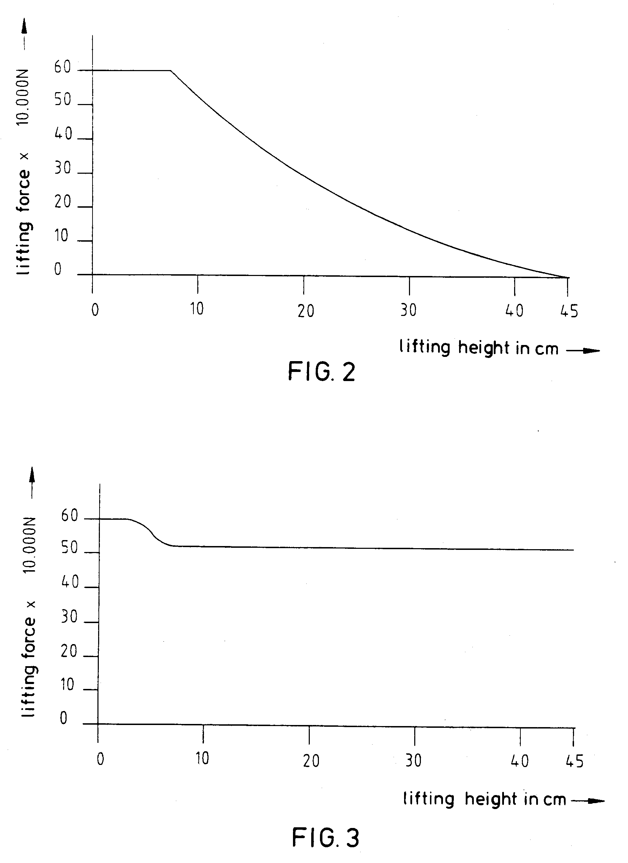

In figure 2 the lifting force is given as a function of the lifting height in centimetres of the prior art airbags. A comparable airbag according to the invention shows a relation between lifting force and lifting height as shown in figure 3. It is clear that the lifting body according to the invention has far superior properties than the prior art lifting body.

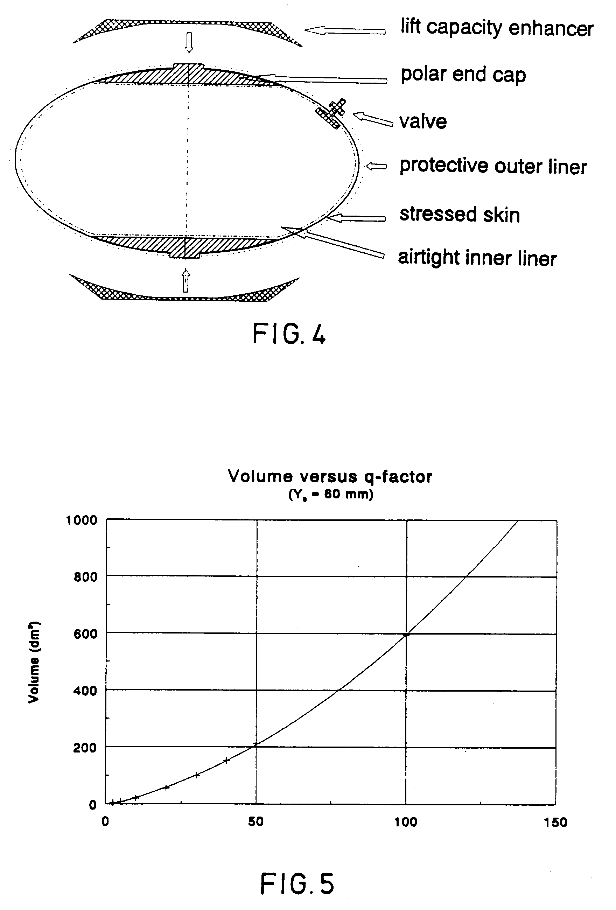

In the attached figure 4 an embodiment of the lifting body of the present invention has been given. The basis of the body is formed by the load carrying stressed skin. This skin is open at the poles, which requires the presence of polar end caps. The stresses acting on these end caps must be transferred to the stressed skin. A sufficiently large flange may assist in this.

To enable the closed stressed skin to hold gases or liquids, an air/liquid-tight inner liner is preferably present, although it is also possible to use a stressed skin that is air/liquid-tight. To inflate the body a valve is present, which will usually be present in a place where generally no lifting force is applied. This valve will of course be connected air/liquid-tight with the inner liner and securely with the stressed body, which must carry the load.

To protect the stressed skin against foreign objects and damage a protective outer liner may be used. Preferably this outer liner is able to withstand mechanical and thermal abuse without early collapse. In practice this means that the outer liner must provide the bag with the possibility to withstand temperatures up to 150°C, surface pressures of at least 7.5-N/mm$^2$ and preferably also resistance against chemicals, such as oils, acids, lye, fats and the like.

In practical use it my be advantageous to add a lift capacity enhancer to the lifting body of the present invention. This lift capacity enhancer is a sort of cap applied over the poles of such a shape that the top and bottom surfaces of the body with enhancers are substantially flat and parallel, without bringing undue stresses in the stressed body.

The volume of the body in unloaded, inflated condition is given by

$$V = \frac{2*\pi*Y_0^{\,3}}{3} \ * \ \sqrt{\frac{(q^2+q+1)^5}{(q^2+q)^3*(2q+1)}} \ * \ \int_0^{\frac{\pi}{2}} \sqrt{1-\frac{q-1}{2q+1} \ * \ \sin^2\theta} \ * \ d\theta$$

wherein q is defined as

$$q \ = \ \frac{Y_u^{\,2}}{Y_i^{\,2}}$$

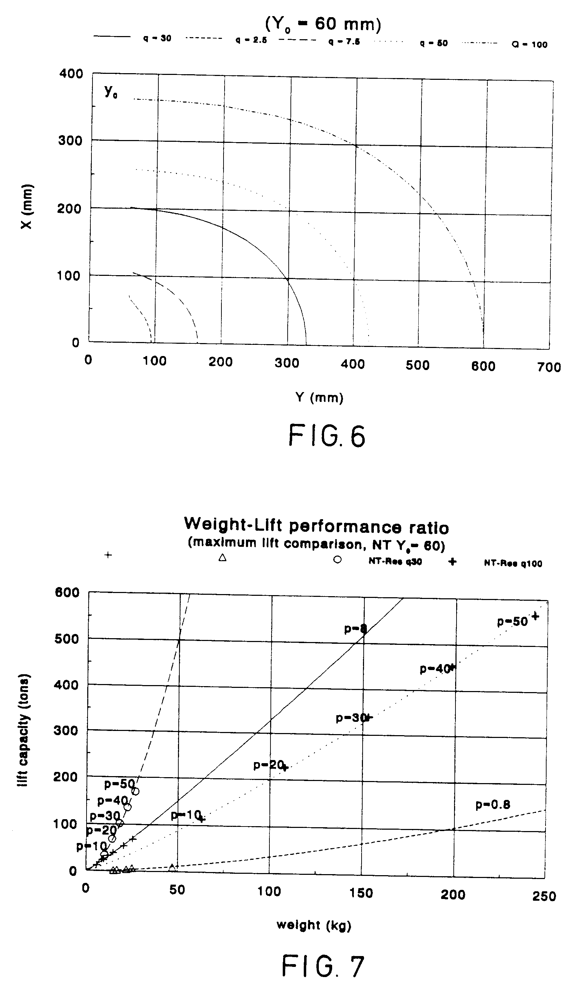

$Y_0$ is the diameter of the pole opening, $Y_u$ is the smallest radius of the optimal part of the pressure vessel, and $Y_i$ is the largest radius of the optimal part of the pressure vessel. The volume of the bag for $Y_0$ is 60 mm as a function of q is given in the attached figure 5. The shape of the body for $Y_0$ is 60 mm and with various values of q is given in the attached figure 6. In Figure 7 the lifting capacity is given for $Y_0$ is 60 mm and q is 30 and 100.

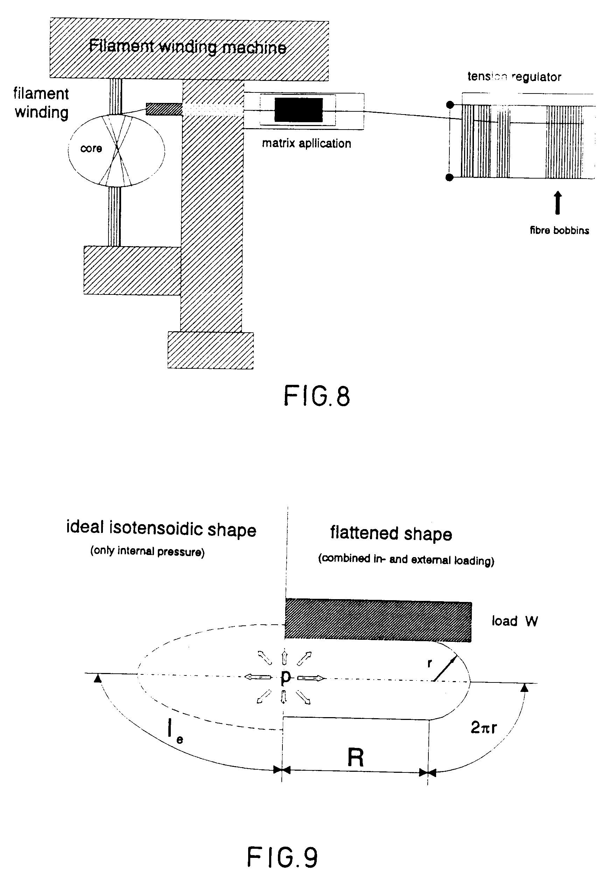

The production of the lifting body according to the invention can preferably be done by winding the continuous fiber around a rotation symmetric body having the required shape. A suitable filament winding machine for use in producing the lifting body of the present invention is shown in figure 8.

After the fiber reinforcement body has been wound it can be incorporated in an elastomer matrix. It is also possible to wind elastomer-impregnated fibers, which results in the forming of the elastomer matrix. In a preferred embodiment the bag is produced by first applying a layer of liquid impermeable material on the body, preferably an elastomer, subsequently winding one or more layers of fibers (strands) around this body, preferably two layers, and finally again applying an elastomer layer, a resistance layer, over the final layer of fibers.

The elastomer matrix can then be solidified, for example by vulcanisation. Suitably the solidification/vulcanisation takes place in flat condition. This results therein that the equilibrium shape in unflated condition is flat, so that the lifting body does not require much place in unflated condition. This is of importance when the lifting body has to be applied in areas where there is not much room, for example in collapsed buildings or after airplane, train or car crashes. When pressurized, the elastomer will be deformed elastically, until the inflated equilibrium shape has been reached.

Depending on the wound shape of the body, which is suitably Gouda-cheese like (that is having the shape of a flat cylinder with continuous, curved edges; a squeezed sphere), when expanded, or more or less elliptical, a wide range of pressures can be applied to it, depending on filament type and quantity. It is generally possible to have one shape of body that can be used for either high pressures or low pressures. Generally pressures between 0.1 bar (g) and pressures higher than generally used at present are possible. Pressures higher than about 50 bars (g) are seldom used.In the attached figure 9 the effect of the external loading on the shape of the body is shown.

It is possible to construct the inflatable body according to the invention in such a manner that the reinforced elastomer matrix is completely airtight, so that no inner pressure bag is necessary. This puts some heavy requirements on the construction of the so-called "poles" of the fiber reinforcement construction. In view thereof it is preferred to fill the fiber reinforced elastomer body with an inner pressure bag, which after inflation follows the equilibrium shape of the reinforced body.

The said poles can be strengthened, for example by using more fiber in the region of the poles. It is also possible to reinforce the poles with a closure from a suitable plastic or metal. It is to be noted that it is also possible to construct a lifting body having a closed pole, especially in case of completely airtight bodies, without inner pressure bag. Depending on the use of the inflatable body, the poles may provide protection against damages due to penetrating shapes in the environment. The poles may be provided with an inlet and/or outlet for the pressurizing medium, provided this does not interfere with the functioning of the inflatable body. In case the poles act also as area where the lifting force is exerted, it may be advantageous to provide the inlet (outlet) at a different place.

In case of separate strengthening of the poles the said strengthening may be discontinuous with respect to the reinforced body.

According to the invention it is possible to couple two or more bags in a rigid or flexible way, for example through specially designed accessories. These bags may be coupled to each other and/or to one or more objects.

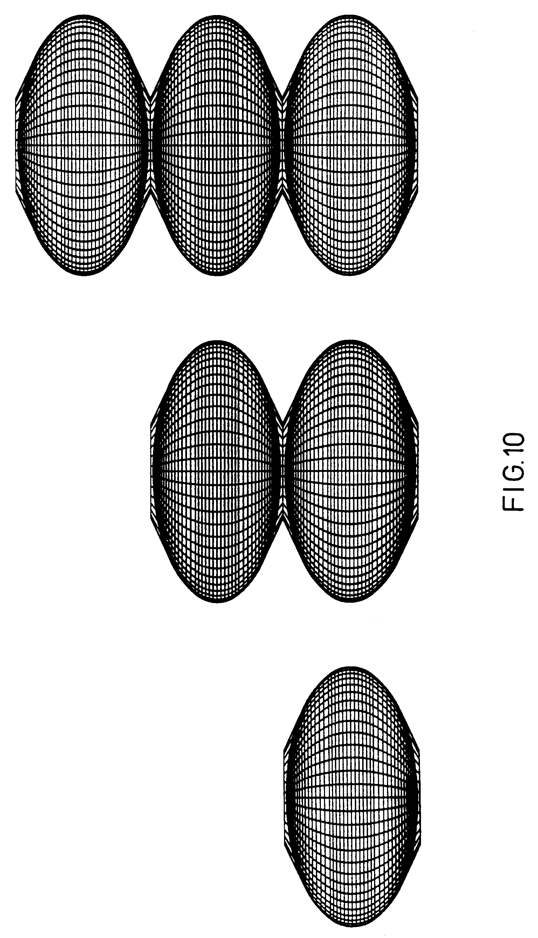

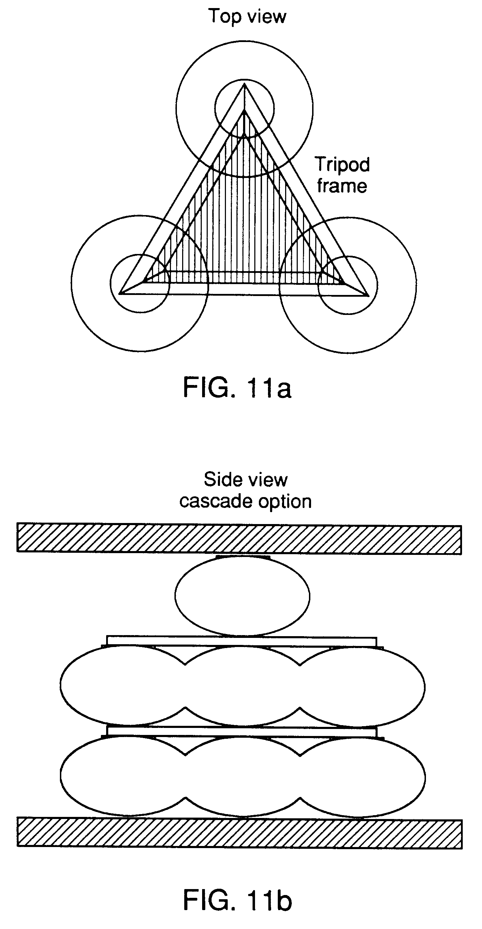

In one embodiment of the invention it is possible to combine two or more bags, wherein the poles act as a strengthening in the construction of the bags. There are various possibilities for combining the bags, some of which have been shown in the figures 10 and 11. In figure 10 the combination of two or more bags on top of each other, has been shown. In this construction the interior of the various bags may be connected with each other. It is also possible to connect bags having the interior of each bag separated from the others.

In an alternative embodiment of the invention, which has been shown in the figure 11, three or more bags may be cascaded together, using suitably designed frames or other accessories.

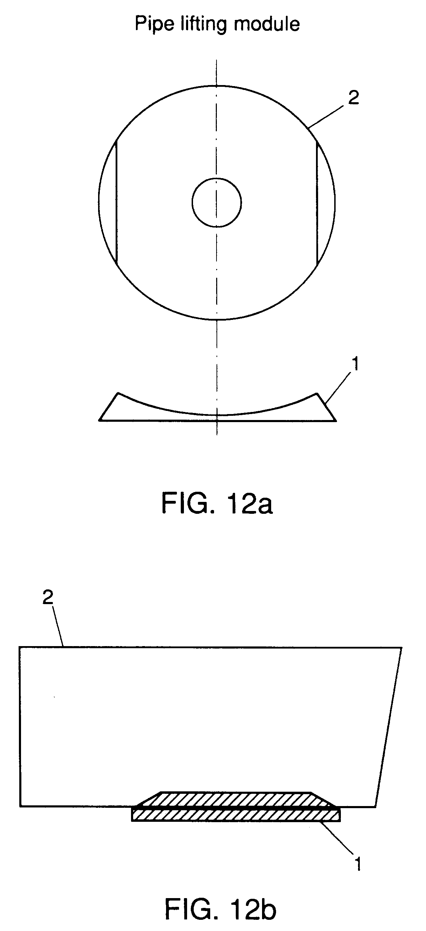

The bags of the invention can also be provided with specially designed accessories, for example to improve the support or the lifting stability. One example of a bag provided with such a support is shown in figure 12, wherein a support for a pipe is shown. Fig. 12$^a$ gives a schematic view of the way in which the support 1 and the pipe 2 are positioned in relation to each other, without the inflated bag, which is positioned below the support. Fig. 12 $^b$ shows a scross-section through the length of the pipe.

The fiber reinforcement can be constructed from various materials, generally comprising natural or synthetic organic fibers, although the well-known aramid fibers, such as Kevlar (TM) and Twaron (TM) are a suitable choice. Those fibers provide sufficient tensile stiffness in combination with strength. Other suitable fibers are all those fibers with a high tensile strength and/or stiffness, like sisal, carbon fibers, E-, R- and S-glass fibers, and those polymeric fibers which are suitable in the environments where the bags are used, such as the high molecular weight polyethylene fibers, polyester fibers and other fibers from high quality plastics (engineering plastics). In order to be able to apply the netting theory to the lifting body of the present invention the Youngs' Modulus of the fibers must be substantially higher than the modulus of the elastomer matrix. Generally the fibers have a modulus of at least ten times the modulus of the matrix.

The elastomer matrix can be any suitable elastomer, although it is preferred that a high quality elastomer having a good resistance against environmental degradation, such as ozone resistance, is used. Suitable elastomers are

EP 0 626 338 B1

for example the isoprene, polyurethane, styrene-butadiene, butadiene-nitrile, EP(D)M, polybutadiene and silicone elastomers, which are optionally vulcanised after the body has been shaped.

The fabrication of the fiber reinforced elastomer body can take place in various ways. A suitable method is winding a pre-impregnated fiber around the rotation symmetric core, optionnally followed by further impregnation of the final fiber reinforcement with the elastomer and solidification and/or vulcanization. However it is also possible to apply an elastomer matrix to the substantially rotation symmetric core prior to the winding of the fibers or after the winding of the fibers. After the fiber reinforcement has been wound around the core, the core is removed. This can be done by using a core that collapses in parts, by a temporary core composed of loosely bound solids or an inflatable core.

## Claims

1. Inflatable body comprising a fiber reinforced elastomer body which is flat in a non-inflated condition and has in an inflated condition a mechanical equilibrium shape, that is predominantly geometrically continuous, non-spherical and non-cylindrical,
   **characterised in that,**
   in said inflated condition, said body has the shape of an oblate sphere with continuous curved edges, and that said body also has poles with openings therein, which are strengthened and closed by polar end caps.

2. Inflatable body according to claim 1, wherein said fiber reinforcement for the said fiber reinforced elastomer body consists of fibers geodetically wound around a flat shaped, rotation symmetric core.

3. Inflatable body according to claim 1 or 2, wherein said elastomer has been integrated with the fibers in the situation wherein the fibers are in rest.

4. Inflatable body according to any one of the claims 1-3, wherein said elastomer has been vulcanised onto the fiber reinforcement.

5. Inflatable body according to any one of the claims 1-4, wherein the fiber reinforcements consists of two or more layers of fibers, preferably chosen from the group consisting of aramide fibers, polyethylene fibers, glass fibers, polyester fibers and carbon fibers.

6. Inflatable body according to any one of the claims 1-5, wherein a separate inner body is present.

7. Inflatable body according to any one of the claims 1-6, wherein the operating pressure of the body ranges from .1 to 50 bars (g).

8. Inflatable body according to any one of the claims 1-7, said body being a lifting body.

9. Combination of two or more inflatable bodies according to any one of the claims 1-8.

10. Use of an inflatable body according to claim 8 for lifting heavy objects.

11. Use of an inflatable body according to claims 1-8 as an inflatable seal, for example for a pipe.

## Patentansprüche

1. Aufblasbarer Körper, mit einem faserverstärkten Elastomerkörper, der in einem nicht-aufgeblasenen Zustand flachliegend ist und in einem aufgeblasenem Zustand eine sich mechanisch im Gleichgewicht befindliche Form hat, die überwiegend geometrisch stetig, nichtkugelförmig und nichtzylindrisch ist,
   **dadurch gekennzeichnet, daß**
   der Körper in dem aufgeblasenem Zustand die Form einer abgeflachten Kugel mit stetig gekrümmten Kanten hat, und daß der Körper außerdem Pole mit Öffnungen darin hat, die durch polare Endkappen verstärkt und verschlossen sind.

2. Aufblasbarer Körper nach Anspruch 1, bei dem die FaserverStärkung für den faserverstärkten Elasomerkörper Fasern enthält, die geodätisch um einen flachgeformten, rotationssymetrischen Kern gewickelt sind.

3. Aufblasbarer Körper nach Anspruch 1 oder 2, bei dem das Elastomer mit den Fasern in dem Zustand integriert wird, in dem sich die Fasern in einem Ruhezustand befinden.

4. Aufblasbarer Körper nach einem der Ansprüche 1 - 3, bei dem das Elastomer auf die Faserverstärkung vulkanisiert ist.

5. Aufblasbarer Körper nach einem der Ansprüche 1 - 4, bei dem die Faserverstärkungen zwei oder mehrere Schichten aus Fasern enthalten, die vorzugsweise aus der Gruppe ausgewählt sind, die Aramid-Fasern, Polyethylen-Fasern, Glas-Fasern, Polyester-Fasern und Kohle-Fasern umfaßt.

6. Aufblasbarer Körper nach einem der Ansprüche 1 - 5, bei dem ein separater Innenkörper vorhanden ist.

7. Aufblasbarer Körper nach einem der Ansprüche 1 - 6, bei dem der Betriebsdruck des Körpers von 1 bis 50 Bar (g) reicht.

8. Aufblasbarer Körper nach einem der Ansprüche 1 - 7, bei dem der Körper ein Hebe-Körper ist.

9. Kombination aus zwei oder mehreren aufblasbaren Körpern nach einem der Ansprüche 1 - 8.

10. Verwendung eines aufblasbaren Körpers nach Anspruch 8 zum Anheben von schweren Gegenständen.

11. Verwendung eines aufblasbaren Körpers nach einem der Ansprüche 1 - 8 als eine aufblasbare Abdichtung für zum Beispiel eine Rohrleitung.

**Revendications**

1. Corps gonflable comprenant un corps élastomère renforcé par des fibres qui est plat à l'état non gonflé et a une forme d'équilibre mécanique à l'état gonflé, c'est-à-dire qui est principalement géométriquement continue, non sphérique et non cylindrique,
   caractérisé en ce que,
   audit état gonflé, ledit corps a la forme d'une sphère aplatie aux pôles avec des bords courbes continus, et en ce que ledit corps comporte aussi des pôles au sein desquels se trouvent des ouvertures, qui sont renforcés et fermés par des capuchons d'extrémité polaires.

2. Corps gonflable selon la revendication 1, dans lequel ledit renfort de fibres du corps élastomère renforcé par des fibres est constitué de fibres enroulées de façon géodésique autour d'un noyau symétrique en rotation de forme plane.

3. Corps gonflable selon la revendication 1 ou 2, dans lequel ledit élastomère a été intégré aux fibres dans la situation dans laquelle les fibres sont au repos.

4. Corps gonflable selon l'une quelconque des revendications 1 à 3, dans lequel ledit élastomère a été vulcanisé sur le renfort de fibres.

5. Corps gonflable selon l'une quelconque des revendications 1 à 4, dans lequel les renforts de fibres sont constitués de deux ou plusieurs de couches de fibres, choisies de préférence parmi le groupe constitué de fibres aramides, de fibres de polyéthylène, de fibres de verre, de fibres polyester et de fibres de carbone.

6. Corps gonflable selon l'une quelconque des revendications 1 à 5, dans lequel un corps intérieur distinct est présent.

7. Corps gonflable selon l'une quelconque des revendications 1 à 6, dans lequel la pression de fonctionnement du corps va de 0,1 à 50 bars (g).

8. Corps gonflable selon l'une quelconque des revendications 1 à 7, ledit corps étant un corps de levage.

9. Combinaison de deux ou de plusieurs corps gonflables selon l'une quelconque des revendications 1 à 8.

10. Utilisation d'un corps gonflable selon la revendication 8 pour lever des objets lourds.

**11.** Utilisation d'un corps gonflable selon les revendications 1 à 8 comme obturateur gonflable, par exemple pour un tuyau.

In rest

FIG.1a

pressure area

rubber-impregnated
fiber cage

base area

inflated condition

FIG.1b

FIG.1c

FIG. 2

FIG. 3

lift capacity enhancer

polar end cap

valve

protective outer liner

stressed skin

airtight inner liner

## FIG. 4

**Volume versus q-factor**
(Y, = 60 mm)

## FIG. 5

$(Y_0 = 60\ mm)$

q - 30 ······ q - 2.5 ─ ─ ─ q - 7.5 ········· q - 50 ─·─·─ Q - 100

## FIG. 6

**Weight-Lift performance ratio**
(maximum lift comparison, NT $Y_0$= 60)

+     △     O   NT-Res q30   +   NT-Res q100

## FIG. 7

FIG.8

FIG.9

FIG.10

Top view

Tripod
frame

FIG. 11a

Side view
cascade option

FIG. 11b

Pipe lifting module

FIG. 12a

FIG. 12b